# EUROPEAN PATENT SPECIFICATION

(11) **EP 3 361 405 B1**
(45) Date of publication and mention of the grant of the patent: **30.12.2020**
(21) Application number: 17155851.3
(22) Date of filing: 13.02.2017
(51) Int. Cl.: G06F 21/55, H04L 29/06

(54) **ENHANCEMENT OF INTRUSION DETECTION SYSTEMS**
VERBESSERUNG VON ANGRIFFERKENNUNGSSYSTEMEN
AMÉLIORATION D'UN SYSTÈME DE DÉTECTION D'INTRUSION

(43) Date of publication of application: 15.08.2018
(73) Proprietor: Nokia Solutions and Networks Oy, 02610 Espoo (FI)
(72) Inventor: EL ABED, Haithem, 91620 Nozay (FR); PAPILLON, Serge, 91620 Nozay (FR)
(74) Representative: Nokia EPO representatives

(56) References cited:
- WO-A1-2016/049319
- US-A1- 2008 168 531
- US-A1- 2016 197 952

## Description

### FIELD OF THE INVENTION

The present invention pertains to the field of data security. More specifically, one embodiment of the disclosure relates to an enhanced intrusion detection system.

### BACKGROUND

Cyber security continues to be a challenging objective to achieve in an environment characterized by rapid technological change. This challenge is illustrated by periodic disclosures of successful high profile attacks. Many of these attacks exploit software vulnerabilities that continue to plague deployed systems. These vulnerabilities are due in large parts to bugs introduced in software which is continually under development. Current defenses mechanisms are clearly not sufficient.

Intrusion detection systems (IDS) could be classified in two broad categories: Knowledge based IDS (static signatures), and behavioral based IDS (dynamic signatures, statistical anomalies). Both are known to have advantages and drawbacks. Static signatures are accurate and well understood but very specific in so that they only detect known attacks. Signatures need to be continually updated. Behavioral based IDS have broader scope in detecting attacks but have high rate of false positives (alerts raised but there is no attacks) and false negatives (real attacks are not being detected). These two types of errors are inter-dependents, administrator can act only on one of these class of errors, an improvement of one leads to a deterioration of the other

There is a need for providing a mechanism to enhance the detection and analysis of cyber-attacks.

US2016/197952 discloses a log analysis system for detecting malicious activity in a network.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for method for an enhanced intrusion detection system, a security device receiving alerts sent by an intrusion detection system monitoring an information system infrastructure, the method comprising the following steps in the security device:
defining for a received alert a time interval including a timestamp of the alert,
collecting log entries related to the time interval by interrogating at least one log server, only the textual portion of the log entries being retained,
distributing the collected log entries into sub-intervals of the time interval and for each sub-interval, concatenating the log entries to yield a paragraph,
extracting from each paragraph one or more events,
combining the extracted events to create sequences of events,
declaring the alert as suspicious if one sequence of events is similar to a predefined sequence of events labeled as suspicious

Advantageously, the invention enhances the classification performance of IDS system, by adding an automatic mechanism that allows the improvement of both types of errors of knowledge based IDS and behavioral based IDS at the same time using a summary analysis of logs. This is achieved by increasing the sensitivity of the IDS, as a result it will generate high rate of alerts and let the system do quick analysis in order to retain the most relevant ones that requires immediate attention.

In an embodiment, the method further comprises declaring the alert as normal if one sequence of events is similar to a predefined sequence of events labeled as normal.

In an embodiment, the method further comprises declaring the alert as neutral if no sequence of events is similar to a predefined sequence of events labeled as normal or suspicious.

In an embodiment, the created sequences of events are compared with a database of predefined sequences of events, using a similarity measure.

In an embodiment, limits of the time interval are configurable parameters depending on the nature of the alert, an history of past alerts, past verdicts on alerts or past time intervals

In an embodiment, the textual portion of the log entries is human readable text.

In an embodiment, the sequences of events are created using permutation of events belonging to the sub-intervals of the time interval.

In an embodiment, the events are extracted for a given paragraph with a given percentage of accuracy.

In an embodiment, only the events with a given percentage of accuracy above a given threshold are kept.

In an embodiment, the received alert contains identifiers of devices and the security device collects metadata from said devices, transforms metadata into human readable text and combines the human readable text with the log entries.

In an embodiment, metadata are collected from said devices after having translated identifiers of devices into network addresses and interrogating said devices via said network addresses, timestamps associated with the metadata being included in the time interval.

In an embodiment, said human readable text is combined with the log entries of the sub-paragraphs by means of the timestamps corresponding to the human readable text.

In an embodiment, one or more events are extracted from each paragraph using deep learning algorithms.

The invention relates also to a security device for for an enhanced intrusion detection system, the security device receiving alerts sent by an intrusion detection system monitoring an information system infrastructure, the security device comprising:
means for defining for a received alert a time interval including a timestamp of the alert,
means for collecting log entries related to the time interval by interrogating at least one log server, only the textual portion of the log entries being retained,
means for distributing the collected log entries into sub-intervals of the time interval and for each sub-interval, concatenating the log entries to yield a paragraph,
means for extracting from each paragraph one or more events,
means for combining the extracted events to create sequences of events,
means for declaring the alert as suspicious if one sequence of events is similar to a predefined sequence of events labeled as suspicious.

The invention also pertains to a computer program capable of being implemented within a device, said program comprising instructions which, when the program is executed within said device, carry out steps according to the inventive method.

The invention is defined in the appended clams.

The present invention and the benefits thereof shall be better understood upon examining the description below, which makes reference to the attached figures, in which:
- FIG. 1 is a schematic block diagram of a communication system according to one embodiment of the invention for enhanced intrusion detection system; and
- FIG. 2 is an algorithm of a method for enhanced intrusion detection system according to one embodiment of the invention.

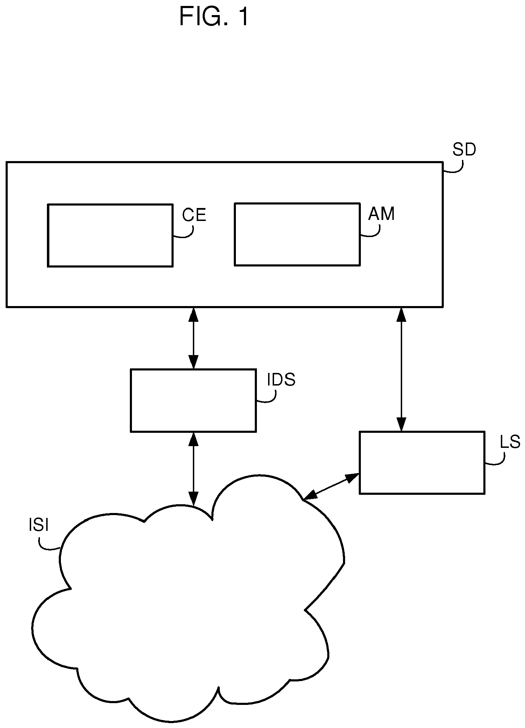

With reference to FIG. 1, a security device SD is linked to an intrusion detection system IDS monitoring an information system infrastructure ISI.

The information system infrastructure ISI can comprise a plurality of servers as well as a plurality of storage devices. The servers may be of any type delivering different services. For example, a server running web applications is a file transfer protocol (FTP) server.

The architecture of the information system infrastructure ISI can be designed as comprising different kind of resources and a log server LS.

The security device SD comprises a correlation engine CE and an analyzing module AM.

The correlation engine CE is in charge of the reception of every alert sent by the intrusion detection system IDS and of the query to the log server LS for each received alert, and retrieves metadata from devices identified in the alerts.

The correlation engine CE receives the alerts form the intrusion detection system IDS. Each alert have a timestamp associated with it, an identifier to identify the alert, and optionally on or more device identifiers that identify devices involved or affected by the alert. The correlation engine CE is responsible of queuing these alerts for processing, alerts could be processed in parallel. The correlation engine CE launches the processing for each alert according to a defined pipeline.

Another function of the correlation engine CE is to identify alerts that overlaps (occur close to each other), and merge the overlapped ones into a single alert (the time interval considered will span these alerts, and a set of identifiers of involved devices will be the union of the device identifiers of each alert).

The correlation engine CE interrogates the log server LS and collects the log entries related to the alert being processed. The correlation engine CE uses a unified interface, defines as query interval a time interval of interest around the timestamp of the alert. The time interval limits are configurable parameters and can be set automatically by the analysis module taking into account the nature of the alert and an history of past alerts, past verdicts on alerts (with retroaction) and past time intervals. The unified interface may access one or more log servers and retrieves all the log entries that fall into a defined time interval for an alert.

Optionally, the correlation engine is responsible for the translation of the identifiers of devices into network addresses as well as for the performance of the appropriate authentication to access these devices. It performs partial forensics on the devices.

The correlation engine may collect this following non-exhaustive list of metadata by means of timestamps associated with the metadata that are included in the time interval, the details described being here for illustration:
- The file names which MAC (Modified, Accessed, Changed) timestamp falls into the defined time interval "query interval". The metadata to text transformation will qualify the file name according to a predefined "ontology" (picture, movie, audio, wallet (bitcoin), credentials (ssh, pgp etc.), system file, user document etc..)

Example of text out from transformation:
"Unknown File created"
"Wallet File accessed"
"System File modified"
   - Processes started during the time interval;
   - The URL (extracted from user browsers history) visited during the time interval, the URL name being transformed into a category (many online service offer this). The history browser also provides a count (how many time the URL is visited) being used to qualify the URL as New, Average or Frequent.
"NewURL visited"
"FrequentURL visited"
   - Connection started during the time interval, example of text output:
      "remote connection started"

In all cases, the correlation engine collects metadata from said devices, transforms metadata into human readable text. The analyzing module AM will then combine the human readable text with the log entries.

The analyzing module AM is responsible for dividing the time interval into sub-intervals that are also called bins. The sub-intervals are used to distribute the log entries into their corresponding bin (the timestamp of the log entries falls into the sub-interval or "bin interval"). Only the textual (human readable) portion of the log entries is retained. For each sub-interval, the analyzing module AM concatenates the log entries to yield a paragraph.

If metadata are collected, the corresponding text is combined with the log entries

For example, the following entries are retrieved for a given sub-interval:
[2.540788] usb 4-3:new high-speed USB device number 2 using xhci_hcd
[2.541171] usb 4-3:new USB device found, idVendor=0424, idProduct=2660
[2.541175] usb 4-3:new USB device strings: Mfr=0, Product=0, SerialNumber=0
[2.541597] hub 4-3:1.0: USB hub found
[2.541737] hub 4-3:1.0: 2 ports detected
[2.542058] NetworkManager[719]: <info>NetworkManager state is now CONNECTED_GLOBAL
[2.542058] NetworkManager[719]: <info>Policy set 'Wired connection1' (eth0) as default for IPv4 routing and DNS
[2.542058]NetworkManager[719]: <info>Writing DNS information to /sbin/resolvconf

The entries are then concatenated into the following paragraph:
"New high speed USB device number. New USB device found. New USB device strings. USB hub found. Ports detected. Network Manager state is now connected Global. Policy set wired connection default routing dns. Writing dns information."

In case text from metadata has to be combined with the log entries, the correlation engine collects metadata from said devices, transforms metadata into text and combines the text with the log entries of the sub-paragraphs by means of the timestamps corresponding to the text.

The analyzing module AM extracts from each paragraph one or more events, using for example a topic segmentation technique of a Natural Language Processing with a specific ontology describing the events (topics) of interest.

One possible implementation could be based on deep learning algorithms using recurrent neural network which is a type of deep neural network that is well suited for sequences. Recurrent neural network is used in state of the art systems performing speech recognition, translation, and time series prediction, many input/output configurations being possible.

For example, the following events are extracted from a given paragraph with a given percentage of accuracy:

| | | |
|---|---|---|
| E1: | USB device inserted | 90% |
| E2: | Network device up | 85% |
| E3: | ... | 35% |

The percentage of accuracy of the events can be compared to a threshold in order to keep only the events with a percentage of accuracy above said threshold.

The analyzing module AM creates possible sequences for a given time interval using the possible permutations of events belonging to a sub-interval or "bin".

For example, the given time is divided in three bins BIN1, BIN2 and BIN3, for which the followings events are extracted
BIN1: E11, E12 and E13;
BIN2: E21 and E22;
BIN3: E31, E32 and E33.

For example, the permutation of E11 and E12 would lead to two sequences, a first sequence of events would be:
E11, E12, E13, E21, E22, E31, E32, E33;
and second sequence of events would be:
E12, E11, E13, E21, E22, E31, E32, E33.

The analyzing module AM compares each sequence of events with a database of labeled (known verdict) events sequences. A similarity measure is used to find the closest sequence, for example by using the number of common events in the two sequences divided by the total number of events in the original sequence. If the similarity is higher than a predefined threshold, the verdict is declared (suspicious or normal) otherwise an unknown verdict is declared.

An expert could be required to examine the alert corresponding to the sequence of alerts yielding to a conclusions that is be used to update the database of the labeled sequence of events.

For example, the following sequence of events yields to a verdict "suspicious":
E11: new url visited
E12: unknown file created
E21: process created
E22: connection started

For the database of labeled events sequences, an automated malware analysis system can be used, that runs and analyzes files and collect comprehensive analysis results that outline what the malware does while running inside an isolated operating system. For example, it can retrieve:
- Traces of calls performed by all processes spawned by the malware
- Files being created, deleted and downloaded by the malware during its execution
- Memory dumps of the malware processes
- Network traffic trace in PCAP format.

Optionally, the analyzing module AM is in charge of automatically setting the time interval for log entries collection and analysis. It takes the nature of the alert and the history of past classification (with past time intervals) as an entry. It then uses clustering technics in order to classify the alert among the history and choses a time interval that in the past led to decisive and correct verdict (which is similar to classic learning technics).

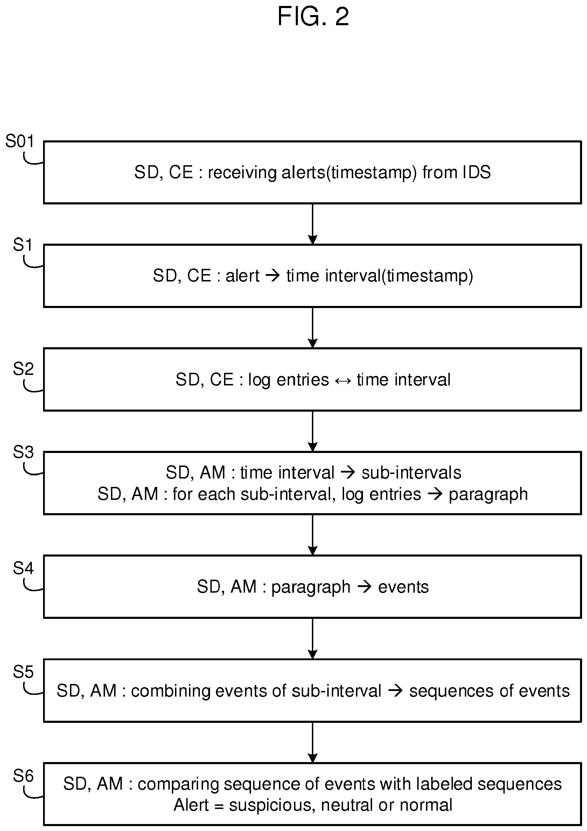

With reference to FIG. 2, a method for an enhanced intrusion detection system according to one embodiment of the invention comprises steps S1 to S6 executed by the security device SD linked to an intrusion detection system IDS monitoring an information system infrastructure.

In an initial step S01, the correlation engine CE of the security device SD receives alerts sent by the intrusion detection system IDS. Each alert have a timestamp that is the time at which the alert was recorded, an identifier to identify the alert, and optionally on or more device identifiers that identify devices involved or affected by the alert.

In step S1, the correlation engine CE defines for a received alert a time interval including the timestamp of the alert. The time interval limits can depend on the nature of the alert and a history of past alerts for example.

In step S2, the correlation engine CE interrogates the log server LS and collects the log entries related to the time interval.

Optionally, the security device collects metadata from said devices, transforms metadata into human readable text and combines the human readable text with the log entries.

In step S3, the analyzing module AM divides the time interval into sub-intervals. The sub-intervals are used to distribute the collected log entries into their corresponding sub-interval. For each sub-interval, the analyzing module AM concatenates the log entries to yield a paragraph.

Optionally, said text from metadata is combined with the log entries of the sub-paragraphs by means of the timestamps corresponding to the text.

In step S4, the analyzing module AM extracts from each paragraph one or more events, with a given percentage of accuracy, using for example a topic segmentation technique of a Natural Language Processing with a specific ontology describing the events (topics) of interest.

In step S5, the analyzing module AM combines the events of the different sub-interval to create one or more sequence of events. More specifically, the analyzing module AM creates possible sequences of events for a given time interval for each permutation of events belonging to the sub-intervals.

In step S6, the analyzing module AM compares each sequence of events with a database of predefined sequences of events labeled as suspicious or normal, and based on this comparison the analyzing module AM delivers a verdict among three possibilities:
1. Suspicious (the system believe the alert should receive immediate attention)
2. Neutral (the system can't tell)
3. Normal (the system believe the event is normal)

A similarity measure can be used to find the closest sequence, and if the similarity is higher than a predefined threshold, the verdict is declared as suspicious or normal otherwise the verdict is declared as neutral.

The invention described here relates to a method and a device for an enhanced intrusion detection system. According to one implementation of the invention, the steps of the invention are determined by the instructions of a computer program incorporated into the device, such as the security device SD. The program comprises program instructions which, when said program is loaded and executed within the device, carry out the steps of the inventive method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the inventive method.

## Claims

1. A method for an enhanced intrusion detection system, a security device (SD) receiving alerts sent by an intrusion detection system monitoring an information system infrastructure, the method comprising the following steps in the security device (SD):
defining (S1) for a received alert a time interval including a timestamp of the alert, the received alert containing identifiers of devices,
collecting (S2) log entries related to the time interval by interrogating at least one log server (LS), wherein the log entries contains human readable text, retaining only the human readable text of the log entries, collecting metadata from said devices, transforming metadata into human readable text, and combining the human readable text from the metadata with the log entries,
dividing the time interval into sub-intervals and distributing (S3) the log entries into their corresponding sub-intervals and for each sub-interval, concatenating the log entries to yield a paragraph,
extracting (S4) from each paragraph one or more events using topic segmentation technique describing events of interest,
combining (S5) the extracted events of the sub-intervals to create one or more sequences of events based on possible permutations of events belonging to the sub-intervals,
declaring (S6) the alert as suspicious if one sequence of events is similar to a predefined sequence of events labeled as suspicious.

2. A method according to claim 1, comprising declaring the alert as normal if one sequence of events is similar to a predefined sequence of events labeled as normal.

3. A method according to claim 1 or 2, comprising declaring the alert as neutral if no sequence of events is similar to a predefined sequence of events labeled as normal or suspicious.

4. A method according any of the claims 1 to 3, wherein the created sequences of events are compared with a database of predefined sequences of events, using a similarity measure.

5. A method according any of the claims 1 to 4, wherein limits of the time interval are configurable parameters depending on the nature of the alert, an history of past alerts, past verdicts on alerts or past time intervals.

6. A method according to any of the claims 1 to 5, wherein the sequences of events are created using permutation of events belonging to the sub-intervals of the time interval.

7. A method according to any of the claims 1 to 6, wherein the events are extracted for a given paragraph with a given percentage of accuracy.

8. A method according to claim 7, wherein only the events with a given percentage of accuracy above a given threshold are kept.

9. A method according to any of the claims 1 to 8, wherein metadata are collected from said devices after having translated identifiers of devices into network addresses and interrogating said devices via said network addresses, timestamps associated with the metadata being included in the time interval.

10. A method according to any of the claims 1 to 9, wherein said human readable text is combined with the log entries of the sub-paragraphs by means of the timestamps corresponding to the human readable text.

11. A method according to any of the claims 1 to 10, wherein one or more events are extracted from each paragraph using deep learning algorithms.

12. A security device (SD) for an enhanced intrusion detection system, the security device receiving alerts sent by an intrusion detection system monitoring an information system infrastructure, the security device comprising:
means (CE) for defining for a received alert a time interval including a timestamp of the alert, the received alert containing identifiers of devices,
means (CE) for collecting log entries related to the time interval by interrogating at least one log server (LS), wherein the log entries contains human readable text, for retaining only the human readable text of the log entries, for collecting metadata from said devices, for transforming metadata into human readable text and for combining the human readable text from the metadata with the log entries,
means (AM) for dividing the time interval into sub-intervals and for distributing the collected log entries into their corresponding sub-intervals and for each sub-interval, concatenating the log entries to yield a paragraph,
means (AM) for extracting from each paragraph one or more events using topic segmentation technique describing events of interest,
means (AM) for combining the extracted events of the sub-intervals to create one or more sequences of events based on possible permutations of events belonging to the sub-intervals,
means (AM) for declaring the alert as suspicious if one sequence of events is similar to a predefined sequence of events labeled as suspicious.

13. A computer-readable medium having embodied thereon a computer program for executing a method for an enhanced intrusion detection system according to any of claims 1 to 11.

## Patentansprüche

1. Verfahren für ein verbessertes Angriffsdetektionssystem, wobei eine Sicherheitsvorrichtung (SD) Warnungen empfängt, die von einem Angriffsdetektionssystem gesendet werden, das eine Informationssysteminfrastruktur überwacht, wobei das Verfahren die folgenden Schritte in der Sicherheitsvorrichtung (SD) umfasst:
Definieren (S1) eines Zeitintervalls, das einen Zeitstempel für die Warnung beinhaltet, für eine empfangene Warnung, wobei die empfangene Warnung Kennungen von Vorrichtungen enthält,
Sammeln (S2) von Protokolleinträgen, die das Zeitintervall betreffen, durch Abfragen von mindestens einem Protokollserver (LS), wobei die Protokolleinträge vom Menschen lesbaren Text enthalten, Verwahren nur des vom Menschen lesbaren Textes der Protokolleinträge, Sammeln von Metadaten von den Vorrichtungen, Umwandeln von Metadaten in vom Menschen lesbaren Text und Kombinieren des vom Menschen lesbaren Textes aus den Metadaten mit den Protokolleinträgen,
Teilen des Zeitintervalls in Unterintervalle und Verteilen (S3) der Protokolleinträge in ihre entsprechenden Unterintervalle und für jedes Unterintervall Verketten der Protokolleinträge, um einen Absatz zu bilden,
Extrahieren (S4) von einem oder mehreren Ereignissen, die Ereignisse von Interesse beschreiben, aus jedem Absatz unter Verwendung einer Themensegmentierungstechnik,
Kombinieren (S5) der extrahierten Ereignisse der Unterintervalle auf Basis von möglichen Permutationen von Ereignissen, die zu den Unterintervallen gehören, um eine oder mehrere Sequenzen von Ereignissen zu erstellen,
Deklarieren (S6) der Warnung als verdächtig, wenn eine Sequenz von Ereignissen einer vordefinierten Sequenz von Ereignissen, die als verdächtig gekennzeichnet ist, ähnlich ist.

2. Verfahren nach Anspruch 1, das das Deklarieren der Warnung als normal umfasst, wenn eine Sequenz von Ereignissen einer vordefinierten Sequenz von Ereignissen, die als normal gekennzeichnet ist, ähnlich ist.

3. Verfahren nach Anspruch 1 oder 2, das das Deklarieren der Warnung als neutral umfasst, wenn keine Sequenz von Ereignissen einer vordefinierten Sequenz von Ereignissen, die als normal oder verdächtig gekennzeichnet ist, ähnlich ist.

4. Verfahren nach einem der Ansprüche 1 bis 3, wobei die erstellten Sequenzen von Ereignissen unter Verwendung eines Ähnlichkeitsmaßes mit einer Datenbank von vordefinierten Sequenzen von Ereignissen verglichen werden.

5. Verfahren nach einem der Ansprüche 1 bis 4, wobei Grenzen der Zeitintervalle auslegbare Parameter sind, die von der Art der Warnung, einem Verlauf früherer Warnungen, früheren Urteilen über Warnungen oder früheren Zeitintervallen abhängig sind.

6. Verfahren nach einem der Ansprüche 1 bis 5, wobei die Sequenzen von Ereignissen unter Verwendung einer Permutation von Ereignissen, die zu den Unterintervallen des Zeitintervalls gehören, erstellt werden.

7. Verfahren nach einem der Ansprüche 1 bis 6, wobei die Ereignisse für einen gegebenen Absatz mit einem gegebenen Prozentsatz der Genauigkeit extrahiert werden.

8. Verfahren nach Anspruch 7, wobei nur die Ereignisse mit einem gegebenen Prozentsatz der Genauigkeit über einem gegebenen Schwellwert behalten werden.

9. Verfahren nach einem der Ansprüche 1 bis 8, wobei Metadaten aus den Vorrichtungen gesammelt werden, nachdem Kennungen von Vorrichtungen in Netzwerkadressen übersetzt und die Vorrichtungen via die Netzwerkadressen abgefragt wurden, wobei mit den Metadaten verknüpfte Zeitstempel im Zeitintervall beinhaltet sind.

10. Verfahren nach einem der Ansprüche 1 bis 9, wobei der vom Menschen lesbare Text mittels der Zeitstempel, die dem vom Menschen lesbaren Text entsprechen, mit den Protokolleinträgen der Unterabsätze kombiniert wird.

11. Verfahren nach einem der Ansprüche 1 bis 10, wobei das eine oder die mehreren Ereignisse unter Verwendung von Tiefenlernalgorithmen aus jedem Absatz extrahiert werden.

12. Sicherheitsvorrichtung (SD) für ein verbessertes Angriffsdetektionssystem, wobei die Sicherheitsvorrichtung Warnungen empfängt, die von einem Angriffsdetektionssystem gesendet werden, das eine Informationssysteminfrastruktur überwacht, wobei die Sicherheitsvorrichtung Folgendes umfasst:
ein Mittel (CE) zum Definieren eines Zeitintervalls, das einen Zeitstempel für die Warnung beinhaltet, für eine empfangene Warnung, wobei die empfangene Warnung Kennungen von Vorrichtungen enthält,
ein Mittel (CE) zum Sammeln von Protokolleinträgen, die das Zeitintervall betreffen, durch Abfragen von mindestens einem Protokollserver (LS), wobei die Protokolleinträge vom Menschen lesbaren Text enthalten, zum Verwahren nur des vom Menschen lesbaren Textes der Protokolleinträge, zum Sammeln von Metadaten von den Vorrichtungen, Umwandeln von Metadaten in vom Menschen lesbaren Text und zum Kombinieren des vom Menschen lesbaren Textes aus den Metadaten mit den Protokolleinträgen,
ein Mittel (AM) zum Teilen des Zeitintervalls in Unterintervalle und zum Verteilen der gesammelten Protokolleinträge in ihre entsprechenden Unterintervalle und für jedes Unterintervall Verketten der Protokolleinträge, um einen Absatz zu bilden,
ein Mittel (AM) zum Extrahieren von einem oder mehreren Ereignissen, die Ereignisse von Interesse beschreiben, aus jedem Absatz unter Verwendung einer Themensegmentierungstechnik,
ein Mittel (AM) zum Kombinieren der extrahierten Ereignisse der Unterintervalle auf Basis von möglichen Permutationen von Ereignissen, die zu den Unterintervallen gehören, um eine oder mehrere Sequenzen von Ereignissen zu erstellen,
ein Mittel (AM) zum Deklarieren der Warnung als verdächtig, wenn eine Sequenz von Ereignissen einer vordefinierten Sequenz von Ereignissen, die als verdächtig gekennzeichnet ist, ähnlich ist.

13. Computerlesbares Medium, auf dem sich ein Computerprogramm zum Ausführen eines Verfahrens für ein verbessertes Angriffsdetektionssystem nach einem der Ansprüche 1 bis 11 befindet.

## Revendications

1. Procédé pour un système de détection d'intrusion amélioré, un dispositif de sécurité (SD) recevant des alertes envoyées par un système de détection d'intrusion surveillant une infrastructure de systèmes d'information, le procédé comprenant les étapes suivantes dans le dispositif de sécurité (SD) :
la définition (S1), pour une alerte reçue, d'un intervalle de temps incluant un horodatage de l'alerte, l'alerte reçue contenant des identifiants de dispositifs,
la collecte (S2) d'entrées de journal se rapportant à l'intervalle de temps par l'interrogation d'au moins un serveur de journalisation (LS), dans lequel les entrées de journal contiennent du texte lisible par un humain, la retenue de seulement le texte lisible par un humain des entrées de journal, la collecte de métadonnées à partir desdits dispositifs, la transformation des métadonnées en texte lisible par un humain, et la combinaison du texte lisible par un humain issu des métadonnées avec les entrées de journal,
la division de l'intervalle de temps en sous-intervalles et la répartition (S3) des entrées de journal dans leurs sous-intervalles correspondants et pour chaque sous-intervalle, la concaténation des entrées de journal pour aboutir à un paragraphe,
l'extraction (S4), à partir de chaque paragraphe, d'un ou de plusieurs événements à l'aide d'une technique de segmentation en sujets décrivant des événements d'intérêt,
la combinaison (S5) des événements extraits des sous-intervalles pour créer une ou plusieurs séquences d'événements sur la base de permutations possibles d'événements appartenant aux sous-intervalles,
la déclaration (S6) de l'alerte comme étant suspecte si une séquence d'événements est similaire à une séquence prédéfinie d'événements marquée comme étant suspecte.

2. Procédé selon la revendication 1, comprenant la déclaration de l'alerte comme étant normale si une séquence d'événements est similaire à une séquence prédéfinie d'événements marquée comme étant normale.

3. Procédé selon la revendication 1 ou 2, comprenant la déclaration de l'alerte comme étant neutre si aucune séquence d'événements n'est similaire à une séquence prédéfinie d'événements marquée comme étant normale ou suspecte.

4. Procédé selon l'une quelconque des revendications 1 à 3, dans lequel les séquences d'événements créées sont comparées avec une base de données de séquences d'événements prédéfinies, à l'aide d'une mesure de similarité.

5. Procédé selon l'une quelconque des revendications 1 à 4, dans lequel les limites de l'intervalle de temps sont des paramètres configurables en fonction de la nature de l'alerte, d'un historique d'alertes passées, de verdicts passés sur les alertes ou d'intervalles de temps passés.

6. Procédé selon l'une quelconque des revendications 1 à 5, dans lequel les séquences d'événements sont créées à l'aide d'une permutation d'événements appartenant aux sous-intervalles de l'intervalle de temps.

7. Procédé selon l'une quelconque des revendications 1 à 6, dans lequel les événements sont extraits pour un paragraphe donné ayant un pourcentage de précision donné.

8. Procédé selon la revendication 7, dans lequel seuls les événements ayant un pourcentage donné de précision au-dessus d'un seuil donné sont conservés.

9. Procédé selon l'une quelconque des revendications 1 à 8, dans lequel des métadonnées sont collectées à partir desdits dispositifs après avoir traduit des identifiants de dispositifs en adresses réseau et l'interrogation desdits dispositifs via lesdites adresses réseau, des horodatages associés aux métadonnées étant inclus dans l'intervalle de temps.

10. Procédé selon l'une quelconque des revendications 1 à 9, dans lequel ledit texte lisible par un humain est combiné avec les entrées de journal des sous-paragraphes au moyen des horodatages correspondant au texte lisible par un humain.

11. Procédé selon l'une quelconque des revendications 1 à 10, dans lequel un ou plusieurs événements sont extraits à partir de chaque paragraphe à l'aide d'algorithmes d'apprentissage profond.

12. Dispositif de sécurité (SD) pour un système de détection d'intrusion amélioré, le dispositif de sécurité recevant des alertes envoyées par un système de détection d'intrusion surveillant une infrastructure de systèmes d'information, le dispositif de sécurité comprenant :
des moyens (CE) pour définir, pour une alerte reçue, un intervalle de temps incluant un horodatage de l'alerte, l'alerte reçue contenant des identifiants de dispositifs,
des moyens (CE) pour collecter des entrées de journal se rapportant à l'intervalle de temps par l'interrogation d'au moins un serveur de journalisation (LS), dans lequel les entrées de journal contiennent du texte lisible par un humain, pour retenir seulement le texte lisible par un humain des entrées de journal, pour collecter des métadonnées à partir desdits dispositifs, pour transformer des métadonnées en texte lisible par un humain et pour combiner le texte lisible par un humain issu des métadonnées avec les entrées de journal,
des moyens (AM) pour diviser l'intervalle de temps en sous-intervalles et pour répartir les entrées de journal collectées dans leurs sous-intervalles correspondants et pour chaque sous-intervalle, concaténer les entrées de journal pour aboutir à un paragraphe,
des moyens (AM) pour extraire, à partir de chaque paragraphe, un ou plusieurs événements à l'aide d'une technique de segmentation en sujets décrivant des événements d'intérêt,
des moyens (AM) pour combiner les événements extraits des sous-intervalles pour créer une ou plusieurs séquences d'événements sur la base de permutations possibles d'événements appartenant aux sous-intervalles,
des moyens (AM) pour déclarer l'alerte comme étant suspecte si une séquence d'événements est similaire à une séquence prédéfinie d'événements marquée comme étant suspecte.

13. Support lisible par ordinateur ayant, incorporé sur celui-ci, un programme d'ordinateur pour exécuter un procédé pour un système de détection d'intrusion amélioré selon l'une quelconque des revendications 1 à 11.
